# FASCICULE DE BREVET EUROPEEN

(11) **EP 1 136 321 B1**
(45) Date de publication et mention de la délivrance du brevet: **20.04.2005**
(21) Numéro de dépôt: 01400705.8
(22) Date de dépôt: 16.03.2001
(51) Int. Cl.: B60R 5/04, B62D 43/04

(54) **Module de rangement pour véhicule automobile, fermé à l'arrière par une façade formant un élément de carrosserie**
Kraftfahrzeug- Ablage- Modul, am Ende geschlossen durch einem Fahrzeugkarosserieformkörper
Vehicle storage compartment, closed at its end by a bodywork element

(30) Priorité: 20.03.2000 FR 0003529
(43) Date de publication de la demande: 26.09.2001
(73) Titulaire: COMPAGNIE PLASTIC OMNIUM, 69007 Lyon (FR)
(72) Inventeur: Delavalle, Dominique, 01100 Marchon (FR); Rochon, Cyrille, 01100 Oyonnax (FR)
(74) Mandataire: Tanty, François

(56) Documents cités:
- EP-A- 0 477 095
- EP-A- 0 816 209
- DE-C- 4 323 621
- DE-U- 7 714 592
- DE-U- 29 615 884
- US-A- 4 072 258
- US-A- 4 228 936
- US-A- 4 676 415
- US-A- 4 795 302
- PATENT ABSTRACTS OF JAPAN vol. 010, no. 270 (M-517), 13 septembre 1986 (1986-09-13) & JP 61 092967 A (NISSAN MOTOR CO LTD), 10 mai 1986 (1986-05-10)

## Description

La présente invention concerne les véhicules automobiles.

On connaît des véhicules dans lesquels la roue de secours est logée dans un support coulissant situé à l'arrière du véhicule, sous le coffre. Ce support laisse déborder vers l'arrière la roue de secours et lui permet d'exercer la fonction d'absorbeur de chocs. Les éléments de signalisation et la plaque de police sont fixés sur le véhicule au-dessus du support coulissant.

On connaît par le modèle d'utilité DE 77 14592 une rallonge de coffre escamotable. Une telle rallonge ne permet pas d'ajouter un volume de rangement sans modifier l'esthétique du véhicule, ce qui n'est pas souhaitable.

Le brevet US 4.676.415 qui sert de base à la présentation en deux parties de la revendication 1, décrit un tiroir de rangement de roue de secours qui peut s'escamoter à travers une ouverture du pare-chocs. Le tiroir a une incidence sur le fonctionnement du système d'absorption de chocs, ce qui oblige à prévoir un système d'absorption de chocs spécifique.

Le tiroir est fixé de manière coulissante sur les longerons du véhicule et comporte une paroi arrière. Cette paroi arrière définit la portion centrale du pare-chocs et sert en outre à la fixation d'un dispositif de remorquage.

Le brevet JP61-092967 décrit un tiroir de rangement d'une roue, portant un pare-chocs.

Il existe, d'une manière générale, un besoin pour améliorer l'esthétique et les capacités de rangement des véhicules automobiles.

Il existe également un besoin pour faciliter l'intégration à la carrosserie d'éléments de signalisation tels que les feux arrière, de recul ou de brouillard, ou d'éléments de détection tel qu'un radar de recul.

II existe encore un besoin pour faciliter et limiter le coût du remplacement des éléments d'un véhicule susceptibles d'être endommagés lors d'un choc arrière.

La présente invention a pour objet de répondre à tout ou partie des besoins ci-dessus.

Elle y parvient grâce au fait que le véhicule comporte un module de rangement arrière, accessible depuis l'extérieur du véhicule, mobile entre une position sortie et une position escamotée, ce module étant caractérisé par le fait qu'il comporte au moins un compartiment permettant de ranger d'autres objets qu'une roue de secours, par le fait qu'il est accessible depuis l'extérieur du véhicule et par le fait qu'il est fermé à l'arrière par une façade arrière agencée pour constituer un élément de carrosserie lorsque le module est en position escamotée.

Grâce à l'invention, l'esthétique du véhicule peut être améliorée par rapport aux véhicules connus décrits plus haut, car il est possible de loger par exemple dans le module de rangement une roue de secours ou galette sans que celle-ci soit apparente.

De plus, la présence de la façade arrière permet d'utiliser le module de rangement pour ranger d'autres objets qu'une roue de secours, par exemple des accessoires tels que des chaînes, une barre de toit, un support de vélo, etc.

Avantageusement, le module arrière ne participe pas à la tenue structurelle du véhicule et n'a pas d'incidence sur le fonctionnement du système d'absorption de chocs du véhicule.

La façade arrière est en outre avantageusement utilisée pour supporter des dispositifs de signalisation et/ou de détection.

Ces dispositifs peuvent être intégrés de manière relativement aisée dans la façade arrière car cette dernière peut être manipulée facilement en usine du fait de son encombrement relativement faible.

En comparaison, de tels éléments de signalisation et/ou de détection pourraient s'avérer plus difficiles à intégrer à un bloc arrière réalisé d'un seul tenant et nettement plus encombrant que la façade arrière.

Enfin, la présence de la façade arrière permet d'améliorer la circulation de l'air lors du déplacement du véhicule et de diminuer la traînée aérodynamique.

Dans une réalisation particulière, le véhicule comportant un bouclier, le module de rangement est solidaire d'éléments de support permettant son montage sur le véhicule, ces moyens de support étant agencés pour permettre de déplacer le tiroir entre une position sortie où il déborde vers l'arrière ou s'entrouvre sous le bouclier et permet à l'utilisateur d'accéder à un volume de rangement, et une position escamotée, dans laquelle la façade arrière du module de rangement forme un élément de carrosserie du véhicule.

Toujours dans une réalisation particulière, le véhicule comporte au moins un absorbeur de chocs à l'arrière et les moyens de support sont agencés pour permettre au module de rangement de passer dessous lorsqu'il est déplacé entre ses positions sortie et escamotée.

Dans cette réalisation, les moyens de support sont agencés pour permettre au module de rangement de passer sous le ou les absorbeurs de chocs avec un mouvement différent d'un mouvement de translation pur, afin de disposer d'un volume de rangement à l'avant du module relativement important, et de permettre, malgré cette configuration, de déplacer le module en contournant par le bas le ou les absorbeurs de chocs.

Ainsi, grâce à une telle cinématique, dans cette réalisation particulière, on peut profiter de l'espace disponible sous le véhicule en avant du ou des absorbeurs de chocs arrière.

Avantageusement, le module de rangement est compartimenté et définit au moins deux volumes de rangement, par exemple un compartiment avant logeant une roue de secours ou une galette et un compartiment arrière utilisé pour ranger d'autres accessoires ou objets.

Avantageusement, la façade arrière du module de rangement est fixée au reste du module par des moyens de fixation aisément démontables.

Par moyens de fixation aisément démontables, il faut comprendre des moyens de fixation qui permettent un remplacement aisé de la façade arrière du module en cas d'endommagement lors d'un choc.

De tels moyens de fixation sont constitués, par exemple, par des moyens de fixation par vissage ou encliquetage.

Le remplacement aisé de la façade arrière du module de rangement permet, dans certains cas, de diminuer le coût de la réparation.

Les éléments de fixation et/ou de support du module de rangement peuvent comporter des liaisons fusibles.

Par liaisons fusibles, il faut comprendre des liaisons qui cassent ou se désengagent en cas de choc léger, de manière à permettre au module de rangement et/ou aux éléments de support de se désolidariser du véhicule et ainsi de réduire le risque d'endommagement du module et/ou de la caisse du véhicule.

Dans une réalisation particulière, le module de rangement est monté de manière à pouvoir pivoter autour d'axes d'articulation.

Ces axes d'articulation peuvent être fixes par rapport au reste du véhicule.

Dans une réalisation particulière, le module de rangement comporte au moins deux éléments articulés l'un par rapport à l'autre.

Le module de rangement peut ainsi comporter un élément avant et un élément arrière articulé par rapport à l'élément avant, l'élément avant comportant un logement pouvant recevoir une roue de secours notamment et l'élément arrière comportant un bac de rangement.

De préférence, l'élément avant est agencé pour coopérer avec des moyens de verrouillage portés par le véhicule, permettant de le maintenir dans une position de route sans empêcher le basculement de l'élément arrière.

Ainsi, l'élément arrière peut être utilisé pour ranger des accessoires ou des objets et l'élément avant utilisé pour loger la roue de secours, l'élément avant n'étant basculé pour permettre d'accéder à la roue de secours qu'en cas de besoin.

L'élément arrière comporte avantageusement un système de verrouillage agencé pour permettre de le maintenir dans une position de fermeture.

Le module de rangement peut comporter des parties d'articulation présentant chacune un logement pour recevoir l'extrémité d'un axe d'articulation solidaire du véhicule, ce logement étant ouvert vers l'arrière pour permettre de libérer le module de rangement en cas de choc arrière.

L'invention a encore pour objet un véhicule automobile équipé d'un module de rangement tel que précité.

L'invention sera mieux comprise à la lecture de la description détaillée qui va suivre, d'exemples de réalisation non limitatifs, et à l'examen du dessin annexé, sur lequel :
- la figure 1 est une vue schématique de côté d'un véhicule équipé d'un module de rangement conforme à un premier exemple de réalisation,
- la figure 2 est une vue schématique en perspective d'un module de rangement conforme à un deuxième exemple de réalisation,
- la figure 3 est une vue schématique et partielle de côté d'un véhicule équipé du module de rangement représenté sur la figure 2, faisant apparaître l'emplacement des axes d'articulation, et
- la figure 4 représente isolement et schématiquement, en perspective, une pièce d'articulation du module de rangement de la figure 2.

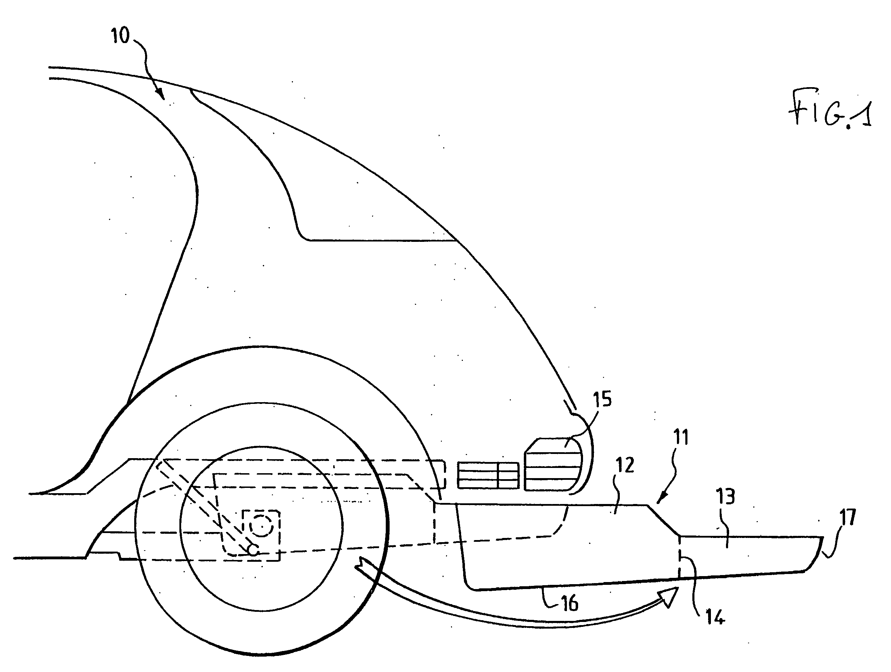

On a représenté sur la figure 1 un véhicule 10 comportant un module rangement ou tiroir arrière 11 qui n'a été représenté que très schématiquement sur le dessin.

Ce module arrière 11 est maintenu par des moyens de support qui n'ont pas été représentés dans un souci de clarté du dessin, qui permettent de le déplacer entre une position escamotée, représentée en pointillé sur la figure 1, et une position sortie, représentée en trait plein sur cette figure.

Le module arrière 11 comporte un compartiment avant 12 et un compartiment arrière 13, séparés par une cloison 14.

Le compartiment avant 12 est utilisé dans l'exemple de réalisation décrit pour loger une roue de secours ou galette tandis que le compartiment arrière 13 est utilisé pour ranger des accessoires ou objets.

Le compartiment avant 12 présente ici une profondeur supérieure à celle du compartiment arrière 13.

En position escamotée, le compartiment arrière 13 se situe sous un absorbeur de chocs 15 du véhicule, comme on peut le voir sur la figure 1.

Les moyens de support précités sont agencés de manière à ce que le module arrière 11 puisse être amené de sa position escamotée à sa position sortie par un mouvement qui n'est pas un mouvement de translation pur mais un mouvement plus complexe afin de lui permettre de passer sous l'absorbeur de chocs 15.

Le module 11 n'a aucune incidence sur le fonctionnement de l'absorbeur de chocs 15

Les moyens de support peuvent comporter par exemple des parallélogrammes permettant d'obtenir une telle cinématique.

On remarquera que le module arrière 11, en position escamotée, améliore l'aérodynamique du véhicule en créant un effet de sol avec sa paroi de fond 16.

Dans cet exemple de réalisation, le module arrière 11 se situe légèrement en retrait de l'absorbeur de chocs 15, de sorte que ce dernier est le premier sollicité en cas de choc arrière, ce qui tend à limiter l'endommagement du module arrière 11.

Les moyens de support comportent avantageusement des liaisons fusibles qui permettent au module arrière 11 de se désolidariser du véhicule en cas de choc arrière violent.

Dans l'exemple de réalisation de la figure 1, le module arrière 11 est fermé à l'arrière par une façade arrière 17 complétant la partie inférieure du pare-chocs du véhicule.

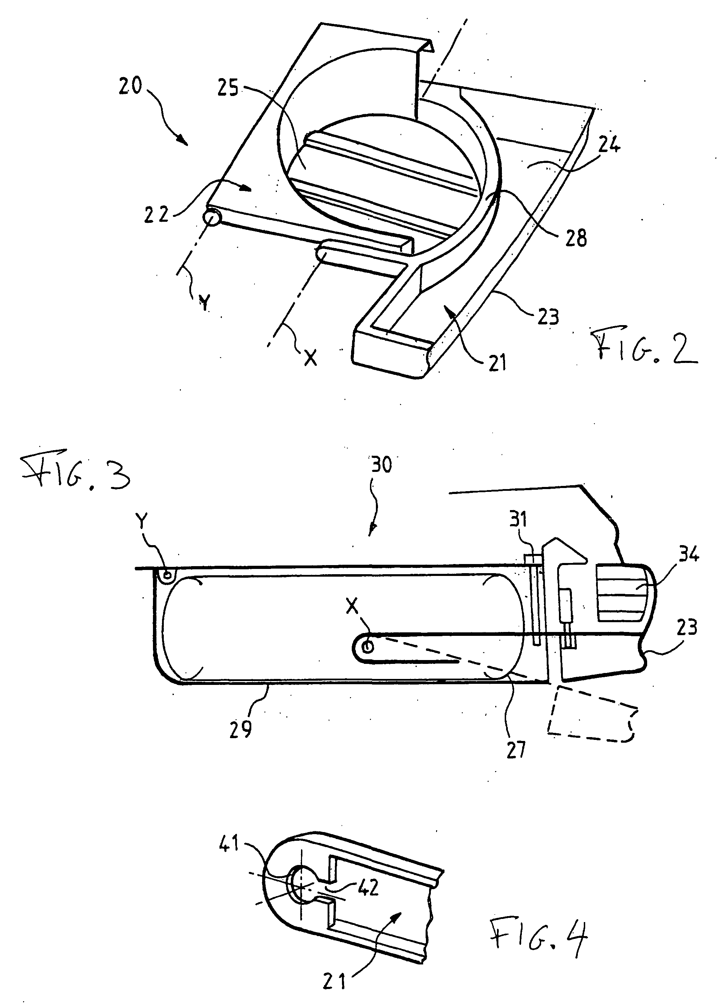

On a représenté sur les figures 2 à 4 un module de rangement ou tiroir arrière 20 comportant un élément arrière 21 et un élément avant 22.

Ces deux éléments 21 et 22 sont réalisés dans l'exemple décrit pour l'essentiel en matière thermoplastique renforcée.

L'élément arrière 21 comporte une façade arrière 23 qui constitue la partie inférieure de la carrosserie d'un véhicule 30 dont on n'aperçoit que la partie arrière sur la figure 3.

Comme on peut le voir sur la figure 2, l'élément arrière 21 forme un bac 24 qui sert au rangement d'accessoires ou d'objets.

L'élément avant 22 forme un logement 25 qui est destiné à recevoir une roue de secours 27, que l'on a représenté partiellement et de manière très schématique sur la figure 3.

L'élément arrière 21 comporte une paroi 28 qui ferme à l'arrière le logement 25 lorsque le tiroir arrière 20 est dans sa configuration de route.

Dans l'exemple de réalisation décrit, l'élément arrière 21 peut pivoter par rapport à l'élément avant 22 autour d'un axe géométrique de rotation X, perpendiculaire à l'axe longitudinal du véhicule et passant sensiblement par le centre du logement 25.

L'élément avant 22 peut pivoter par rapport au véhicule autour d'un axe Y parallèle à l'axe X.

L'élément avant 22 est maintenu dans une position de route où la paroi de fond 29 du logement 25 est maintenue sensiblement horizontale par un système d'accrochage 31 qui n'a été représenté que très schématiquement sur la figure 3.

Ce système d'accrochage est actionnable depuis le fond du coffre du véhicule pour libérer l'élément avant 22.

Il peut s'agir par exemple d'une manette comportant un crochet capable de venir en prise sur un rebord de l'élément avant 22 pour maintenir celui-ci dans sa position de route.

Une rotation de la manette précitée permet de libérer le rebord en question et de permettre à l'élément avant 22 de basculer vers le bas.

Grâce au maintien de l'élément avant 22 en position de route par le système d'accrochage 31, l'élément arrière 21 peut être basculé indépendamment de l'élément avant 22 pour accéder au bac de rangement 24.

Des moyens de verrouillage sont prévus pour maintenir l'élément arrière 21 en position de route lorsqu'il n'est pas nécessaire d'accéder au bac de rangement 24.

Ces moyens de verrouillage peuvent être constitués par exemple par une serrure solidaire de l'élément arrière 21 et commandable par le système de fermeture centralisé du véhicule.

On remarquera sur la figure 3 que l'élément arrière 21 se situe en position de route sous un absorbeur de chocs 34 du véhicule sans faire saillie nettement vers l'arrière, de sorte que l'absorbeur de chocs 34 est atteint en premier en cas de choc arrière.

Avantageusement, comme dans l'exemple de réalisation décrit, l'élément arrière 21 est articulé à son extrémité avant sur l'élément avant 22 au moyen de parties d'articulation telles que celle que l'on a représentée isolément sur la figure 4, comportant un logement 41 pour recevoir l'extrémité d'un axe d'articulation solidaire de l'élément avant 22.

Le logement 41 comporte un passage 42 s'étendant vers l'arrière de façon à permettre à l'élément arrière 21 de se désengager des axes d'articulation de l'élément avant en cas de déplacement vers l'avant sous l'effet d'un choc arrière.

D'une manière générale, dans tous les exemples de réalisation décrits, la façade arrière du module de rangement est avantageusement amovible et sert de support à des dispositifs d'éclairages et/ou à des capteurs ou détecteurs divers.

Bien entendu, l'invention n'est pas limitée aux exemples de réalisation qui viennent d'être décrits.

## Revendications

1. Module de rangement arrière pour véhicule automobile, mobile entre une position sortie et une position escamotée et situé sous le véhicule, comportant au moins un compartiment permettant de ranger d'autres objets qu'une roue de secours, étant fermé à l'arrière par une façade arrière (5 ; 17 ; 23), le véhicule comportant un bouclier, le module étant solidaire d'éléments de support permettant son montage sur le véhicule, ces éléments de support étant agencés pour permettre de déplacer le module entre une position sortie où il s'entrouvre sous le bouclier et permet à l'utilisateur d'accéder à un volume de rangement depuis l'extérieur du véhicule, et une position escamotée, dans laquelle la façade arrière du module forme un élément de carrosserie du véhicule, **caractérisé par le fait que** lesdits éléments de support sont agencés pour permettre un déplacement du module avec un mouvement différent d'un mouvement de translation pur, afin de permettre de déplacer le module en contournant par le bas un ou plusieurs absorbeurs de chocs, ou **par le fait que** le module est monté de manière à pouvoir pivoter autour d'axes d'articulation.

2. Module selon la revendication 1, **caractérisé par le fait qu'**il ne participe pas à la tenue structurelle du véhicule, étant sans incidence sur le fonctionnement d'un système d'absorption de chocs (15) du véhicule.

3. Module selon la revendication 1 ou 2, **caractérisé par le fait que** la façade arrière (5 ; 17 ; 23) supporte des dispositifs de signalisation et/ou de détection.

4. Module selon l'une des trois revendications précédentes, **caractérisé par le fait qu'**il est compartimenté et définit au moins deux volumes de rangement.

5. Module selon la revendication immédiatement précédente, **caractérisé par le fait qu'**un compartiment sert à loger une roue de secours ou une galette.

6. Module selon l'une quelconque des revendications précédentes, **caractérisé par le fait que** les axes d'articulation sont fixes par rapport au véhicule.

7. Module selon l'une quelconque des revendications précédentes, **caractérisé par le fait qu'**il comporte au moins deux éléments articulés.

8. Module selon la revendication précédente, **caractérisé par le fait qu'**il comporte un élément avant (22) et un élément arrière (21) articulé par rapport à l'élément avant, l'élément avant (22) comportant un logement (25) pouvant recevoir une roue de secours (27) notamment et l'élément arrière (21) comportant un bac de rangement (24).

9. Module selon la revendication précédente, **caractérisé par le fait que** l'élément avant est agencé pour coopérer avec des moyens de verrouillage portés par le véhicule permettant de le maintenir dans une position de route sans empêcher le basculement de l'élément arrière.

10. Module selon la revendication précédente, **caractérisé par le fait que** l'élément arrière (21) comporte un système de verrouillage agencé pour permettre de le maintenir dans une position de fermeture.

11. Module selon l'une quelconque des revendications 8 à 10, **caractérisé par le fait que** l'élément arrière comporte des parties d'articulation présentant chacune un logement (41) pour recevoir l'extrémité d'un axe d'articulation solidaire de l'élément avant, ce logement étant ouvert vers l'arrière pour permettre de libérer l'élément arrière en cas de choc arrière.

12. Module selon l'une quelconque des revendications précédentes, **caractérisé par le fait que** la façade arrière (5 ; 17 ; 23) est fixée au reste du module par des liaisons aisément démontables.

13. Module selon la revendication 8, **caractérisé par le fait que** les éléments articulés (21, 22) sont essentiellement réalisés en matière thermoplastique renforcée.

14. Module selon l'une des revendications 4 et 5, **caractérisé par le fait que** le module arrière comporte un compartiment avant (12) et un compartiment arrière (13) séparés par une cloison (14), le compartiment avant ayant notamment une profondeur supérieure à celle du compartiment arrière.

15. Module selon la revendication précédente, **caractérisé par le fait que** le compartiment arrière (13) se situe sous un absorbeur de chocs.

16. Véhicule automobile, **caractérisé par le fait qu'**il comporte à l'arrière, un module de rangement conforme à l'une quelconque des revendications précédentes.

## Patentansprüche

1. Hinteres Stauraummodul für Kraftfahrzeuge, welches zwischen einer ausgefahrenen und einer eingefahrenen Position beweglich ist, sich unterhalb des Fahrzeugs befindet, und mindestens ein Fach zum Verstauen anderer Gegenstände als ein Ersatzrad aufweist, und welches nach hinten mit einem hinteren Außenteil (5; 17; 23) abschließt, wobei das Fahrzeug eine Stoßfängerverkleidung aufweist, wobei das Modul einstückig mit Stützelementen ausgebildet ist, mit denen es am Fahrzeug angebracht werden kann, wobei diese Stützelemente derart angeordnet sind, dass das Modul zwischen einer ausgefahrenen Position, in der es sich unterhalb der Stoßfängerverkleidung leicht öffnet, so dass der Nutzer von außerhalb des Fahrzeugs Zugang zu einem Stauraum hat, und einer eingefahrenen Position, in der die hintere Außenseite des Moduls ein Karosserieelement des Fahrzeugs bildet, verschieblich gelagert ist, **dadurch gekennzeichnet, dass** die Stützelemente derart angeordnet sind, dass das Modul anders als durch reines Verschieben bewegt werden kann, so dass das Modul so verschoben werden kann, dass es von unten an einem oder mehreren Stoßdämpfern vorbeigeführt wird, oder dass das Modul derart angebracht ist, dass es um Gelenkachsen verschwenkbar ist.

2. Modul nach Anspruch 1, **dadurch gekennzeichnet, dass** es nicht zur Strukturfestigkeit des Fahrzeugs beiträgt, da es keine Auswirkung auf die Funktionsweise eines Stoßdämpfersystems (15) des Fahrzeugs hat.

3. Modul nach Anspruch 1 oder 2, **dadurch gekennzeichnet, dass** die hintere Außenseite (5; 17; 23) Signalleuchten und/oder Sensoranordnungen trägt.

4. Modul nach einem der drei vorangegangenen Ansprüche, **dadurch gekennzeichnet, dass** es in Fächern unterteilt ist und mindestens zwei Stauräume begrenzt.

5. Modul nach dem direkt vorangegangenen Anspruch, **dadurch gekennzeichnet, dass** ein Fach dazu dient, ein Ersatzrad bzw. ein Notrad unterzubringen.

6. Modul nach einem der vorangegangenen Ansprüche, **dadurch gekennzeichnet, dass** die Gelenkachsen relativ zum Fahrzeug festgelegt sind.

7. Modul nach einem der vorangegangenen Ansprüche, **dadurch gekennzeichnet, dass** es mindestens zwei gelenkig miteinander verbundene Elemente aufweist.

8. Modul nach dem vorangegangenen Anspruch, **dadurch gekennzeichnet, dass** es ein vorderes Element (22) und ein mit dem vorderen Element gelenkig verbundenes hinteres Element (21) aufweist, wobei das vordere Element (22) eine Aufnahme (25) insbesondere für ein Ersatzrad (27) und das hintere Element (21) eine Ablageschale (24) aufweist.

9. Modul nach dem vorangegangenen Anspruch, **dadurch gekennzeichnet, dass** das vordere Element derart angeordnet ist, dass es mit am Fahrzeug angebrachten Verriegelungsmitteln zusammenwirkt, mit denen dieses in Fahrposition gehalten wird, ohne dabei das Kippen des hinteren Elements zu verhindern.

10. Modul nach dem vorangegangenen Anspruch, **dadurch gekennzeichnet, dass** das hintere Element (21) ein Verriegelungssystem aufweist, das derart ausgebildet ist, dass dieses in einer Schließstellung gehalten werden kann.

11. Modul nach einem der Ansprüche 8 bis 10, **dadurch gekennzeichnet, dass** das hintere Element Gelenkteile aufweist, welche jeweils eine Aufnahme (41) für das Ende einer mit dem vorderen Element einstückig ausgebildeten Gelenkachse haben, wobei diese Aufnahme nach hinten offen ist, so dass das hintere Element bei einem Heckaufprall freigegeben werden kann.

12. Modul nach einem der vorangegangenen Ansprüche, **dadurch gekennzeichnet, dass** die hintere Außenseite (5; 17; 23) über leicht lösbare Verbindungen am übrigen Modul befestigt ist.

13. Modul nach Anspruch 8, **dadurch gekennzeichnet, dass** die gelenkig miteinander verbundenen Elemente (21, 22) im Wesentlichen aus einem verstärkten Thermoplast hergestellt sind.

14. Modul nach einem der Ansprüche 4 und 5, **dadurch gekennzeichnet, dass** das hintere Modul ein vorderes Fach (12) und ein hinteres Fach (13) aufweist, welche durch eine Trennwand (14) voneinander abgetrennt sind, wobei das vordere Fach insbesondere tiefer ist als das hintere Fach.

15. Modul nach dem vorangegangenen Anspruch, **dadurch gekennzeichnet, dass** das hintere Fach (13) sich unterhalb eines Stoßdämpfers befindet.

16. Kraftfahrzeug, **dadurch gekennzeichnet, dass** es im hinteren Teil ein Stauraummodul nach einem der vorangegangenen Ansprüche aufweist.

## Claims

1. A rear storage module for a motor vehicle, the module being movable between an extended position and a retracted position, and being situated beneath the vehicle, including at least one compartment enabling articles other than a spare wheel to be stored, being closed at the rear by a rear facade (5; 17; 23) the vehicle including a shield, the module being secured to support elements enabling it to be mounted on the vehicle, said support elements being arranged to enable the module to be moved between an extended position in which it opens ajar beneath the shield to provide the user with access to a storage volume from outside the vehicle, and a retracted position in which the rear facade of the module forms an element of the bodywork of the vehicle, **characterized by** the fact that said support elements are arranged to enable the module to be moved in a movement that is not a pure translation movement, so as to enable the module to be moved downwardly around one or more impact absorbers, or by the fact that the module is mounted so as to be capable of pivoting about hinge pins.

2. A module according to claim 1, **characterized by** the fact that it does not contribute to the mechanical strength of the vehicle, having no effect on the operation of an impact absorber system (15) of the vehicle.

3. A module according to claim 1 or 2, **characterized by** the fact that the rear facade (5; 17; 23) supports signaling and/or detector devices.

4. A module according to any one of the three preceding claims, **characterized by** the fact that it is compartmentalized and defines at least two storage volumes.

5. A module according to the immediately preceding claim, **characterized by** the fact that one such compartment serves to house a spare wheel.

6. A module according to any of the preceding claims, **characterized by** the fact that the hinge pins are fixed relative to the vehicle.

7. A module according to any one of the preceding claims, **characterized by** the fact that it comprises two hinged-together elements.

8. A module according to the preceding claim, **characterized by** the fact that it comprises a front element (22) and a rear element (21) hinged relative to the front element, the front element (22) including a housing (25) capable of receiving a spare wheel (27) in particular, and the rear element (21) including a storage bin (24).

9. A module according to the preceding claim, **characterized by** the fact that the front element is arranged to co-operate with locking means carried by the vehicle and enabling it to be maintained in a road position without preventing the rear element from tilting.

10. A module according to the preceding claim, **characterized by** the fact that the rear element (21) has a locking system arranged to enable it to be maintained in a closed position.

11. A module according to any one of claims 8 to 10, **characterized by** the fact that the rear element includes hinge portions each presenting a housing (41) for receiving the end of a hinge pin secured to the front element, each of said housings being rearwardly open so as to enable the rear element to be released in the event of a rear impact.

12. A module according to any preceding claim, **characterized by** the fact that the rear facade (5; 17; 23) is fastened to the remainder of the module by links that are easily disassembled.

13. A module according to claim 8, **characterized by** the fact that the hinged elements (21, 22) are essentially made out of reinforced thermoplastic material.

14. A module according to claim 4 or 5, **characterized by** the fact that the rear module comprises a front compartment (12) and a rear compartment (13) separated by a partition (14), the front compartment having in particular a depth greater than that of the rear compartment (13).

15. A module according the preceding claim, **characterized by** the fact that the rear compartment (13) is situated beneath an impact absorber.

16. A motor vehicle, **characterized by** the fact that it includes, at the rear, a storage module according to any one of the preceding claims.
